# EUROPEAN PATENT APPLICATION

(11) **EP 3 456 934 A1**
(43) Date of publication of application: **20.03.2019**
(21) Application number: 18189837.0
(22) Date of filing: 20.08.2018
(51) Int. Cl.: F01N 3/022, F01N 3/035, F01N 3/10, F01N 13/00, F01N 3/20, F01N 3/28

(54) **AFTERTREATMENT SYSTEM**

(30) Priority: 19.09.2017 US 201715708303
(71) Applicant: Caterpillar Inc., Peoria, IL 61629 (US)
(72) Inventor: Herrera Malo, Guillermo, Peoria, Illinois 61614 (US); Driscoll, James, Dunlap, Illinois 61525 (US); Smith, Cory, Metamora, Illinois 61548 (US); Gireesh, Guruprasad, Peoria, Illinois 61614 (US); Park, Paul, Peoria, Illinois 61615 (US); Rodman, Anthony, Peoria, Illinois 61615 (US); Anderson, Colleen, Germantown Hills, Illinois 61548 (US)
(74) Representative: Boult Wade Tennant LLP

(57) **Abstract**

An aftertreatment system (202) for treating a high-volume exhaust flow is provided. The aftertreatment system (202) includes a filter module (204). The aftertreatment system (202) also includes a conduit (210) in fluid communication with the filter module (204). The aftertreatment system (202) further includes at least one aftertreatment module (212) in fluid communication with the conduit (210). The filter module (204) is adapted to selectively receive at least one filter element (206) therein. The at least one filter element (206) is adapted to reduce a backpressure within the aftertreatment system (202). The filter module (204) is also adapted to provide incremental levels of particulate matter reduction from the exhaust flow based, at least in part, on a number of filter elements (206) therein.

## Description

### Technical Field

The present disclosure relates to an aftertreatment system. More particularly, the present disclosure relates to a modular aftertreatment system for treating a high-volume exhaust flow.

### Background

An internal combustion engine, such as used for marine applications, generates a high-volume exhaust flow during an operation thereof. This high-volume exhaust flow may be treated within an aftertreatment system before releasing into the atmosphere. A sea going vessel having the engine installed thereon may travel across various jurisdictions globally having varying emission standards related to particulate matter emission, NOx emission, among others. As a result, the user may require the ability and flexibility to engage one or more aftertreatment components in order to limit related emissions to meet the applicable emissions standard of each jurisdiction the vessel enters.

For example, in some jurisdictions, the vessel may be permitted a relative higher particulate matter emission compared to some other jurisdictions permitting a relatively lower particulate matter emission. In such a situation, the aftertreatment system may require additional components capable of reducing particulate matter to meet the particulate matter emission standard under all operating conditions thereof. However, operating the aftertreatment system to meet such stricter requirements in jurisdictions that have no such restriction on particular matter emission or a less strict requirement could result in higher than necessary operation cost, reduced aftertreatment component life, and reduced productivity of the aftertreatment system. Hence, there is a need for an improved aftertreatment system that provides the user the flexibility to engage or disengage the components therein based on operational or regulatory requirements.

U.S. Published Application Number 2003/0039595 describes an aftertreatment system having modular emissions filters and modular muffler turning elements stacked on one another or arranged in an end-to-end relation to one another to form an exhaust processor without using a common outer shell. The modules are interchangeable and a kit including a wide variety of types of exhaust component modules is used at an exhaust processor assembly site to facilitate assembly of customized exhaust processors.

### Summary of the Disclosure

In an aspect of the present disclosure, an aftertreatment system for treating a high-volume exhaust flow is provided. The aftertreatment system includes a filter module. The aftertreatment system also includes a conduit in fluid communication with the filter module. The aftertreatment system further includes at least one aftertreatment module in fluid communication with the conduit. The filter module is adapted to selectively receive at least one filter element therein. The at least one filter element is adapted to reduce a backpressure within the aftertreatment system. The filter module is also adapted to provide incremental levels of particulate matter reduction from the exhaust flow based, at least in part, on a number of filter elements therein.

In another aspect of the present disclosure, an aftertreatment system for treating a high-volume exhaust flow is provided. The aftertreatment system includes a plurality of filter modules. The aftertreatment system also includes a conduit in fluid communication with at least one of the plurality of filter modules. The aftertreatment system further includes at least one aftertreatment module in fluid communication with the conduit. Each of the plurality of filter modules is adapted to selectively receive at least one filter element therein. The at least one filter element is adapted to reduce a backpressure within the aftertreatment system. Each of the plurality of filter modules is also adapted to provide incremental levels of particulate matter reduction from the exhaust flow based, at least in part, on a number of filter elements therein respectively.

In yet another aspect of the present disclosure, an engine is provided. The engine includes an engine block and a plurality of cylinders provided in the engine block. The engine also includes a cylinder head provided on the engine block and an exhaust manifold fluidly coupled to each of the plurality of cylinders. The exhaust manifold is adapted to receive a high-volume exhaust flow from the plurality of cylinders. The engine further includes an aftertreatment system fluidly coupled to the exhaust manifold. The aftertreatment system is adapted to receive and treat the high-volume exhaust flow from the exhaust manifold. The aftertreatment system includes a filter module. The aftertreatment system also includes a conduit in fluid communication with the filter module. The aftertreatment system further includes at least one aftertreatment module in fluid communication with the conduit. The filter module is adapted to selectively receive at least one filter element therein. The at least one filter element is adapted to reduce a backpressure within the aftertreatment system. The filter module is also adapted to provide incremental levels of particulate matter reduction from the exhaust flow based, at least in part, on a number of filter elements therein.

Other features and aspects of this disclosure will be apparent from the following description and the accompanying drawings.

### Brief Description of the Drawings

FIG. 1 is a schematic representation of an exemplary engine, according to one embodiment of the present disclosure;
FIG. 2 is a schematic representation of an aftertreatment system for the engine of FIG. 1, according to one embodiment of the present disclosure;
FIG. 3 is another schematic representation of the aftertreatment system of FIG. 2, according to another embodiment of the present disclosure;
FIG. 4 is another schematic representation of the aftertreatment system of FIG. 2, according to another embodiment of the present disclosure; and
FIG. 5 is another schematic representation of the aftertreatment system of FIG. 2, according to another embodiment of the present disclosure.

### Detailed Description

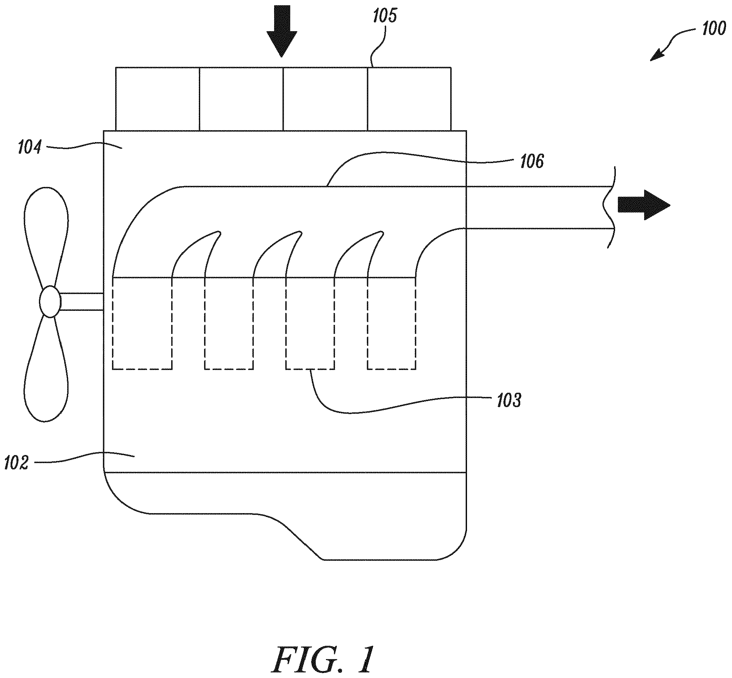

Wherever possible, the same reference numbers will be used throughout the drawings to refer to the same or the like parts. Referring to FIG. 1, an exemplary engine 100 is illustrated. The engine 100 is an internal combustion engine powered by any fuel known in the art, such as natural gas, diesel, gasoline, and/or a combination thereof. In some embodiments, the engine 100 may be associated with a machine (not shown) including, but not limited to a locomotive, a marine vessel, a land vehicle, and a power generator, among others. The engine 100 and/or the machine may be employed in any industry including, but not limited to construction, agriculture, forestry, mining, transportation, waste management, aviation, marine, material handling, and power generation.

The engine 100 includes an engine block 102. The engine block 102 includes one or more cylinders 103 provided therein. The cylinders 103 may be arranged in any configuration including, but not limited to an inline, radial, and "V", among others. Each of the cylinders 103 is adapted to receive a piston (not shown) therein. The cylinders 103 are adapted to generate a high-volume exhaust flow therefrom. The engine 100 also includes a cylinder head 104 mounted on the engine block 102. The cylinder head 104 houses one or more components and/or systems of the engine 100 including, but not limited to an intake manifold 105, a valve train (not shown), and sensors (not shown), among others.

The engine 100 also includes an exhaust manifold 106 provided on the cylinder head 104. In one embodiment, the exhaust manifold 106 may be coupled to the cylinder head 104. In another embodiment, the exhaust manifold 106 may be integral with respect to the cylinder head 104, based on application requirements. The exhaust manifold 106 is fluidly coupled to the cylinders 103. Accordingly, the exhaust manifold 106 is adapted to receive the high-volume exhaust flow from the cylinders 103. Additionally, the engine 100 may include various other components and/or systems (not shown) including, but not limited to a crankcase, a fuel system, an air system, a cooling system, a lubrication system, a turbocharger, an exhaust gas recirculation system, and peripheries, among others.

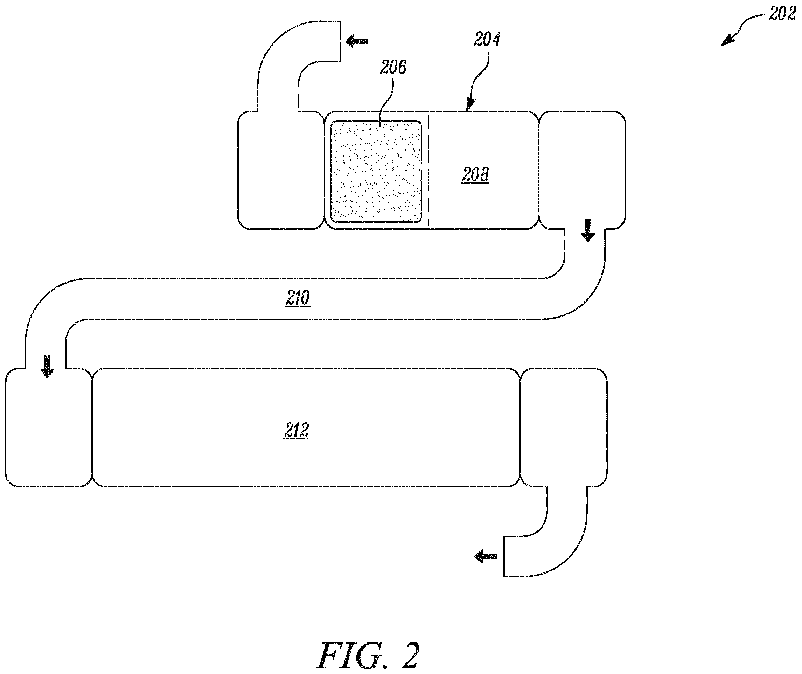

Referring to FIG. 2, the engine 100 further includes an aftertreatment system 202. The aftertreatment system 202 will be hereinafter interchangeably referred to as "the system 202". The system 202 is adapted to be fluidly coupled to the exhaust manifold 106. Accordingly, the system 202 is adapted to receive and treat the high-volume exhaust flow from the exhaust manifold 106. The system 202 is adapted to treat exhaust gases present in the exhaust flow in the form of, including but not limited to filtration, oxidation, and reduction, among others, based on application requirements.

The system 202 includes at least one filter module 204. The filter module 204 is provided in fluid communication with the exhaust manifold 106. More specifically, the filter module 204 is provided downstream of the exhaust manifold 106. The filter module 204 is adapted to selectively receive at least one filter element 206 therein. In the illustrated embodiment, the filter element 206 is a partial flow filter. Accordingly, the filter module 204 is adapted to reduce a backpressure within the system 202 and/or on the engine 100. In other embodiments, the filter element 206 may be any other particulate filter known in the art.

The partial flow filter (not shown) may be any partial flow filter known in the art, such as a ceramic-based partial flow filter. For example, in one embodiment, the partial flow filter may include a plurality of longitudinal cells aligned in parallel with respect to one another. Each of the plurality of longitudinal cells may be open on an upstream end thereof. Every alternating longitudinal cell of the plurality of longitudinal cells may be plugged on a downstream end thereof, thus, forming an array of close-ended longitudinal cells.

Also, every intermediate longitudinal cell of the plurality of longitudinal cells may be open on a downstream end thereof, thus, forming an array of open-ended longitudinal cells. Such an arrangement of the plurality of longitudinal cells may force the exhaust flow entrained within each of the close-ended longitudinal cells to migrate across walls of the plurality of longitudinal cells and, further, into the adjacent open-ended longitudinal cells.

Each of the open-ended longitudinal cells may inherently be at a lower pressure than each of the close-ended longitudinal cells due to a higher exhaust velocity therein. Also, the exhaust flow entrained within each of the open-ended longitudinal cells may pass unimpeded and unfiltered. As a result, the partial flow filter may provide approximately 50% reduction on the backpressure within the system 202 and/or on the engine 100. Also, the partial flow filter may provide a larger surface area for collection of particulate matter present in the exhaust flow with respect to a full flow filter (not shown).

Additionally, or optionally, the filter module 204 is also adapted to selectively include a free flow segment 208 therein. The free flow segment 208 is provided in fluid communication with the filter element 206. More specifically, the free flow segment 208 is provided downstream of the filter element 206. In other embodiments, the free flow segment 208 may be provided upstream of the filter element 206. The free flow segment 208 is adapted to reduce the backpressure within the system 202 and/or on the engine 100.

In some embodiments, the filter module 204 may be adapted to selectively receive one or more additional filter elements (not shown) therein. The additional filter element may include a configuration similar to a configuration of the filter element 206. Accordingly, the additional filter element may be a partial flow filter or any other particulate filter known in the art. In such a situation, the additional filter element may be provided downstream of the filter element 206 and upstream of the free flow segment 208. In some embodiments, the additional filter element may be provided downstream of the free flow segment 208. In some embodiments, the filter module 204 may include the additional filter element in lieu of the free flow segment 208. In such a situation, the free flow segment 208 may be omitted. The additional filter element in association with the filter element 206 is adapted to provide incremental levels of particulate matter reduction from the exhaust flow.

In the illustrated embodiment, the filter element 206 and/or the additional filter element is a catalyzed partial flow filter. Accordingly, the filter element 206 and/or the additional filter element may be coated with any catalyst material known in the art, such as platinum. In one embodiment, the filter element 206 and/or the additional filter element may be a partially-catalyzed partial flow filter. In another embodiment, the filter element 206 and/or the additional filter element may be a fully-catalyzed partial flow filter. In yet another embodiment, the filter element 206 and/or the additional filter element may be a zone-catalyzed partial flow filter. In other embodiments, the filter element 206 and/or the additional filter element may be a non-coated / non-catalyzed partial flow filter, based on application requirements.

Also, in some embodiments, the filter element 206 and/or the additional filter element may be selectively plugged on an upstream end or a downstream end thereof respectively. For example, in one embodiment, the filter element 206 may be plugged on the upstream end thereof, whereas the additional filter element may be plugged on the downstream end thereof. In another embodiment, the filter element 206 may be plugged on the downstream end thereof, whereas the additional filter element may be plugged on the upstream end thereof. In another embodiment, both the filter element 206 and the additional filter element may be plugged on the upstream ends thereof or the downstream ends thereof respectively, based on application requirements.

The system 202 may also selectively include a conduit 210 provided in fluid communication with the filter module 204. More specifically, the conduit 210 is provided downstream of the filter module 204. The conduit 210 is adapted to provide a passage for the exhaust flow from the filter module 204. The system 202 may further selectively include at least one aftertreatment module 212 provided in fluid communication with the conduit 210. In one embodiment, the aftertreatment module 212 may be a selective catalytic reduction (SCR) unit.

Accordingly, the aftertreatment module 212 may include a single SCR unit or multiple SCR units provided in fluid communication with one another. Also, in such a situation, each of the multiple SCR units may have similar or varying exhaust gas flow capacity with respect to one another, based on the requirements of the application. The SCR unit may be any SCR unit known in the art. For example, the SCR unit may be including, but not limited to a zeolite-based SCR unit, a vanadium-based SCR unit, and/or a combination thereof, among others, based on application requirements. In another embodiment, the aftertreatment module 212 may include a reductant dosing unit, such as a diesel exhaust fluid (DEF) dosing unit. In another embodiment, the aftertreatment module 212 may include a mixing element including, but not limited to a perforated type mixing element, a flap type mixing element, a turbulent flow type mixing element, a swirl flow type mixing element, and/or a combination thereof, among others.

In yet another embodiment, the aftertreatment module 212 may include a diesel oxidation catalyst (DOC) unit. In some embodiments, the aftertreatment module 212 may include one or more modules, such as one or more SCR units, the DEF dosing unit, the mixing element, and/or the DOC unit, based on application requirements. In some embodiments, some components of the aftertreatment module 212 may be disposed internally within the conduit 210. For example, in some situations, the DEF dosing unit and/or the mixing element may be disposed within the conduit 210. The system 202 may further selectively include a downstream component (not shown) provided in fluid communication with the aftertreatment module 212 including, but not limited to a muffler, a silencer, a chimney, a flare, among others, based on application requirements.

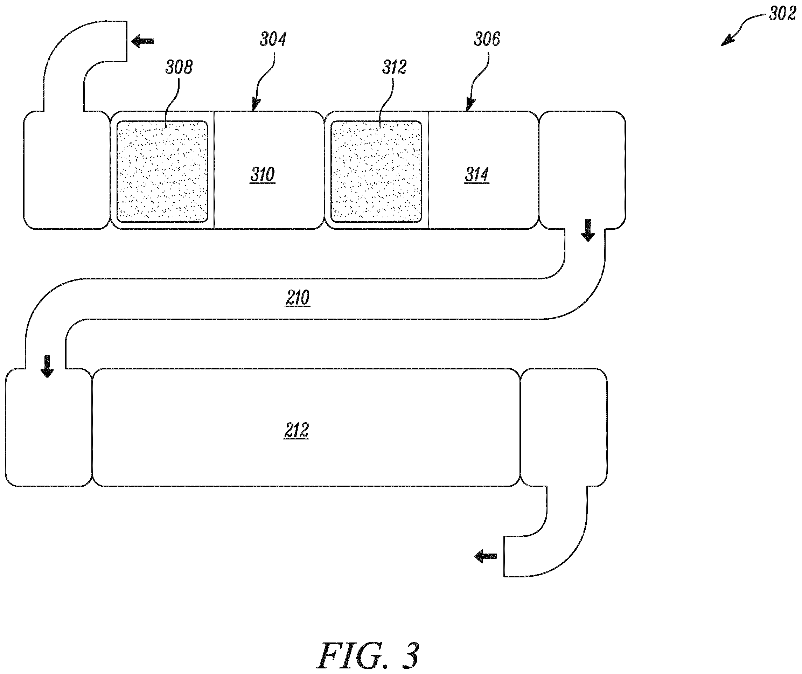

In some embodiments, the system 202 may selectively include a plurality of filter modules. For example, referring to FIG. 3, the system 302 may selectively include a first filter module 304 and a second filter module 306. Each of the first filter module 304 and the second filter module 306 includes a configuration similar to the filter module 204 (shown in FIG. 2). Accordingly, the first filter module 304 is adapted to selectively receive a first filter element 308 and a first free flow segment 310 therein. Also, the second filter module 306 is adapted to selectively receive a second filter element 312 and a second free flow segment 314 therein. Each of the first filter element 308 and the second filter element 312 is adapted to provide incremental levels of the particulate matter reduction from the exhaust flow.

In some embodiments, the first filter module 304 and/or the second filter module 306 may be adapted to receive one or more additional filter elements (as described with reference to FIG. 2), based on application requirements. In some situations, the additional filter elements may be provided along with the first free flow segment 310 and/or the second free flow segment 314 within the first filter module 304 and/or the second filter module 306 respectively. In some situations, the additional filter elements may be provided in lieu of the first free flow segment 310 and/or the second free flow segment 314 within the first filter module 304 and/or the second filter module 306 respectively. The additional filter element in association with each of the first filter element 308 and/or the second filter element 312 is adapted to provide incremental levels of the particulate matter reduction from the exhaust flow.

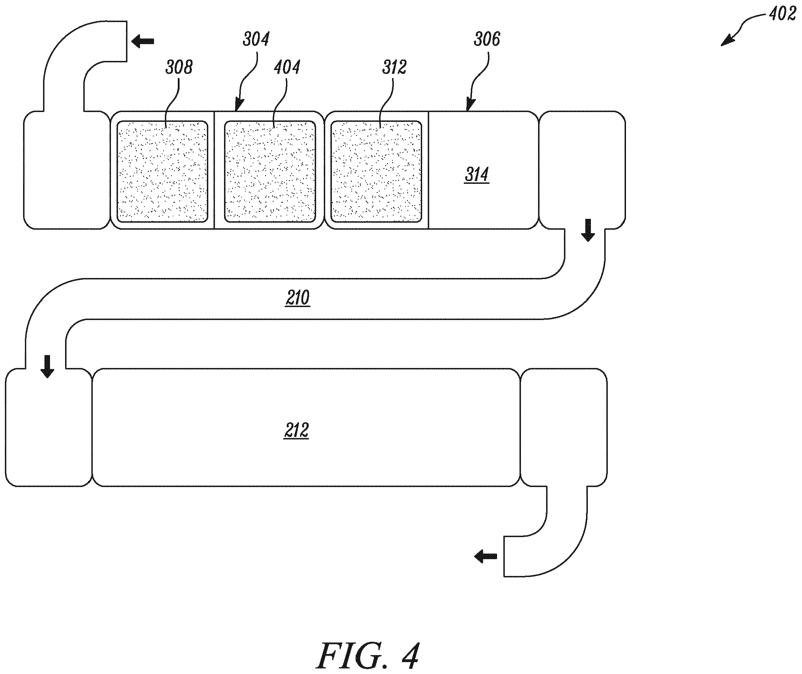

In another embodiment, referring to FIG. 4, the system 402 may selectively include a third filter element 404 provided within the first filter module 304. In the illustrated embodiment, the third filter element 404 is provided in lieu of the first free flow segment 310. In other embodiments, the third filter element 404 may be provided along with the first filter element 308 and the first free flow segment 310. In such a situation, the third filter element 404 may be provided downstream of the first filter element 308 and upstream of the first free flow segment 310. In another situation, the third filter element 404 may be provided upstream of the first filter element 308. In yet another situation, the third filter element 404 may be provided downstream of the first free flow segment 310. The third filter element 404 in association with each of the first filter element 308 and the second filter element 312 is adapted to provide incremental levels of the particulate matter reduction from the exhaust flow.

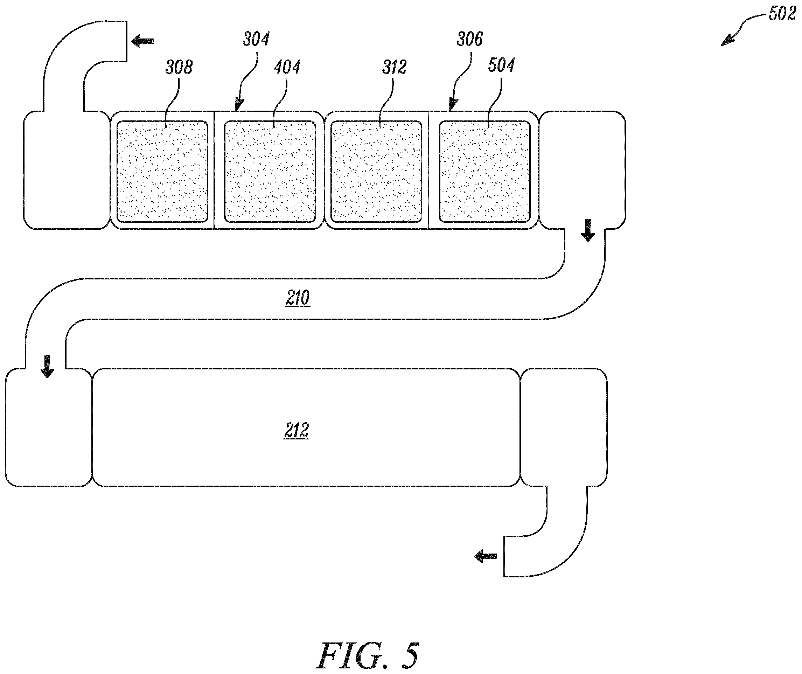

In yet another embodiment, referring to FIG. 5, the system 502 may selectively include a fourth filter element 504 provided within the second filter module 306. In the illustrated embodiment, the fourth filter element 504 is provided in lieu of the second free flow segment 314. In other embodiments, the fourth filter element 504 may be provided along with the second filter element 312 and the second free flow segment 314. In such a situation, the fourth filter element 504 may be provided downstream of the second filter element 312 and upstream of the second free flow segment 314. In another situation, the fourth filter element 504 may be provided upstream of the second filter element 312. In yet another situation, the fourth filter element 504 may be provided downstream of the second free flow segment 314. The fourth filter element 504 in association with each of the first filter element 308, the second filter element 312, and the third filter element 404 is adapted to provide incremental levels of the particulate matter reduction from the exhaust flow.

It should be noted that, in other embodiments, the plurality of filter modules may include any number of filter modules, based on application requirements. Also, each of the plurality of filter modules may be adapted to selectively receive any number of filter elements and/or free flow segments therein, based on application requirements and without limiting the scope of the disclosure. Each of the plurality of filter modules is adapted to reduce the backpressure within the system 202, 302, 402, 502 and/or on the engine 100. Also, each of the plurality of filter modules is adapted to provide incremental levels of the particulate matter reduction from the exhaust flow, based on the number of filter modules and the number of filter elements within each of the plurality of filter modules.

In the illustrated embodiment, one or more of the first filter element 308, the second filter element 312, the third filter element 404, and/or the fourth filter element 504 is a catalyzed partial flow filter. Accordingly, one or more of the first filter element 308, the second filter element 312, the third filter element 404, and/or the fourth filter element 504 may be coated with any catalyst material known in the art, such as platinum. In one embodiment, one or more of the first filter element 308, the second filter element 312, the third filter element 404, and/or the fourth filter element 504 may be a partially-catalyzed partial flow filter.

In another embodiment, one or more of the first filter element 308, the second filter element 312, the third filter element 404, and/or the fourth filter element 504 may be a fully-catalyzed partial flow filter. In yet another embodiment, one or more of the first filter element 308, the second filter element 312, the third filter element 404, and/or the fourth filter element 504 may be a zone-catalyzed partial flow filter. In other embodiments, one or more of the first filter element 308, the second filter element 312, the third filter element 404, and/or the fourth filter element 504 may be a non-coated / non-catalyzed partial flow filter, based on application requirements.

Also, in some embodiments, one or more of the first filter element 308, the second filter element 312, the third filter element 404, and/or the fourth filter element 504 may be selectively plugged on an upstream end or a downstream end thereof respectively. For example, referring to FIG. 3, in one embodiment, the first filter element 308 may be plugged on the upstream end thereof, whereas the second filter element 312 may be plugged on the downstream end thereof. In another embodiment, the first filter element 308 may be plugged on the downstream end thereof, whereas the second filter element 312 may be plugged on the upstream end thereof. In another embodiment, both the first filter element 308 and the second filter element 312 may be plugged on the upstream ends thereof or the downstream ends thereof respectively, based on application requirements.

In another embodiment, referring to FIG. 4, the first filter element 308 may be plugged on the upstream end thereof, whereas the third filter element 404 may be plugged on the downstream end thereof. In another embodiment, the first filter element 308 may be plugged on the downstream end thereof, whereas the third filter element 404 may be plugged on the upstream end thereof. In another embodiment, both the first filter element 308 and the third filter element 404 may be plugged on the upstream ends thereof or the downstream ends thereof respectively, based on application requirements. Also, the second filter element 312 may be selectively plugged on the upstream end or the downstream end thereof, based on application requirements.

In yet another embodiment, referring to FIG. 5, the second filter element 312 may be plugged on the upstream end thereof, whereas the fourth filter element 504 may be plugged on the downstream end thereof. In another embodiment, the second filter element 312 may be plugged on the downstream end thereof, whereas the fourth filter element 504 may be plugged on the upstream end thereof. In another embodiment, both the second filter element 312 and the fourth filter element 504 may be plugged on the upstream ends thereof or the downstream ends thereof respectively, based on application requirements. Also, the first filter element 308 and/or the third filter element 404 may be selectively plugged on the upstream end and/or the downstream end thereof respectively, as described in relation to FIG. 4.

### Industrial Applicability

The present disclosure relates to the system 202, 302, 402, 502 having a modular configuration. In one embodiment, as shown in FIG. 2, the system 202 may selectively include the single filter module 204 with the single filter element 206, the single free flow segment 208, and/or the additional filter element therein, thus, providing a one-stage particulate matter filtration. In another embodiment, as shown in FIG. 3, the system 302 may selectively include the first filter module 304 and the second filter module 306 with the first filter element 308, the first free flow segment 310, the second filter element 312, and/or the second free flow segment 314 therein respectively, thus, providing a two-stage particulate matter filtration.

In another embodiment, as shown in FIG. 4, the system 402 may selectively include the first filter module 304 and the second filter module 306 with the first filter element 308, the third filter element 404, the second filter element 312, and/or the second free flow segment 314 therein respectively, thus, providing a three-stage particulate matter filtration. In yet another embodiment, as shown in FIG. 5, the system 502 may selectively include the first filter module 304 and the second filter module 306 with the first filter element 308, the third filter element 404, the second filter element 312, and/or the fourth filter element 504 therein respectively, thus, providing a four-stage particulate matter filtration.

As such, the system 202, 302, 402, 502 may include any number of filter modules with any number of filter elements therein in order to provide incremental levels of particulate matter reduction from the exhaust flow, thus, providing a multi-stage particulate matter filtration, based on emission requirements. Also, the system 202, 302, 402, 502 may include any number of filter modules with any number of filter elements and/or free flow segments therein in order to limit the backpressure within the system 202, 302, 402, 502 and/or the engine 100. Also, in some embodiments, the system 202, 302, 402, 502 may omit the filter modules and/or the filter elements therein to omit the particulate matter filtration from the exhaust flow, in situations when the particulate matter filtration may not be required, based on emission requirements.

An arrangement of two or more partial flow filters in succession with respect to one another, such as the first filter element 308 and the third filter element 404, and/or the second filter element 312 and the fourth filter element 504, provides successive and gradual filtration of particulate matter from the exhaust flow while providing limited restriction to the exhaust flow. Accordingly, each successive filter element provides added particulate matter filtration capability while imposing a lower backpressure within the system 202, 302, 402, 502 and/or on the engine 100. Each added filter element may provide increased particulate matter filtration at a ratio higher than a ratio at which the backpressure may increase, in turn, resulting in an increased filtration-to-backpressure coefficient with respect to that of a large, single full flow filter, or small, multiple full flow filters.

The system 202, 302, 402, 502 provides a modular design such that different levels of particulate matter filtration may be achieved by providing serviceable joints and inclusion of one or more filter elements, based on emission requirements. For example, one or more filter modules may be added by a user within the system 202, 302, 402, 502. Further, the one or more filter modules may include reduced number of filter elements and/or one or more free flow segments therein when a required level of particulate matter filtration may be low. Also, the user may selectively add one or more filter elements in the one or more free flow segments, and/or may selectively add new filter modules to the existing filter modules when the required level of particulate matter filtration may be high. As such, the system 202, 302, 402, 502 may allow flexibility and ease in increasing or decreasing the filtration capacity to meet the applicable emission requirements or other user operational requirements.

Additionally, the one or more filter elements may be catalyzed. As such, the catalyst may provide passive soot regeneration and/or improved soot layer distribution within the respective filter modules, in turn, improving a service life of the one or more filter elements. Also, in some embodiments, one or more filter elements may be plugged upstream, thus, providing improved filtration stability within the system 202, 302, 402, 502. Further, in some embodiments, one or more filter elements may be plugged downstream, thus, providing improved ash accumulation within the system 202, 302, 402, 502.

Further, the system 202, 302, 402, 502 may selectively include the aftertreatment module 212 which may further selectively include one or more of the DOC unit, the DEF dosing unit, the mixing element and/or the one or more SCR units. For example, in some situations when NOx reduction may not be required based on emission requirements, the user may omit the DEF dosing unit, the mixing element, and/or the SCR unit from the system 202, 302, 402, 502 in order to reduce system cost, operational cost, and component / system life. Also, in some situations when higher NOx reduction may be required based on emission requirements, the user may add the DEF dosing unit, the mixing element, and/or one or more SCR units into the system 202, 302, 402, 502 in order to meet emission requirements.

The system 202, 302, 402, 502 provides a simple, efficient, and cost-effective modular configuration. The system 202, 302, 402, 502 may employ existing aftertreatment components, such as the filter elements, in turn, reducing development cost, manufacturing cost, tooling cost, among others. The system 202, 302, 402, 502 may be retrofitted in any engine system with minimal or no changes to the existing system.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of the disclosure. Such embodiments should be understood to fall within the scope of the present disclosure as determined based upon the claims and any equivalents thereof.

## Claims

1. An aftertreatment system (202) for treating a high-volume exhaust flow, the aftertreatment system (202) comprising:
a filter module (204);
a conduit (210) in fluid communication with the filter module (204); and
at least one aftertreatment module (212) in fluid communication with the conduit (210), wherein the filter module (204) is adapted to selectively receive at least one filter element (206) therein, wherein the at least one filter element (206) is adapted to reduce a backpressure within the aftertreatment system (202), and wherein the filter module (204) is adapted to provide incremental levels of particulate matter reduction from the exhaust flow based, at least in part, on a number of filter elements (206) therein.

2. The aftertreatment system (202) of claim 1, wherein the at least one filter element (206) is a partial flow filter.

3. The aftertreatment system (202) of claim 1, wherein the at least one filter element (206) is any one of a partially catalyzed, a fully catalyzed, and a zone catalyzed filter element (206).

4. The aftertreatment system (202) of claim 1, wherein the filter module (204) is further adapted to include a free flow segment (208) in fluid communication with the at least one filter element (206).

5. The aftertreatment system (202) of claim 1, wherein the at least one filter element (206) is plugged on an upstream end thereof.

6. The aftertreatment system (202) of claim 1, wherein the at least one filter element (206) is plugged on a downstream end thereof.

7. The aftertreatment system (202) of claim 1, wherein the at least one aftertreatment module (212) includes at least one of a diesel oxidation catalyst (DOC) unit, a diesel exhaust fluid (DEF) dosing unit, and a selective catalytic reduction (SCR) unit.
